# EUROPÄISCHE PATENTSCHRIFT

(11) **EP 1 066 181 B1**
(45) Veröffentlichungstag und Bekanntmachung des Hinweises auf die Patenterteilung: **07.08.2002**
(21) Anmeldenummer: 99919149.7
(22) Anmeldetag: 26.03.1999
(51) Int. Cl.: B60T 7/10, B60T 13/74

(54) **ELEKTRISCHE FESTSTELLBREMSE (EPB)**
ELECTRIC PARKING BRAKE (EPB)
FREIN DE STATIONNEMENT ELECTRIQUE (EPB)

(30) Priorität: 31.03.1998 DE 19814305; 27.08.1998 DE 19838886
(43) Veröffentlichungstag der Anmeldung: 10.01.2001
(73) Patentinhaber: Continental Teves AG & Co. oHG, 60488 Frankfurt (DE)
(72) Erfinder: BALZ, Jürgen, D-65510 Hünstetten-Oberlibbach (DE); ECKERT, Alfred, D-55129 Mainz-Hechtsheim (DE); KANT, Bernhard, D-65239 Hochheim (DE); SKOTZEK, Peter, D-60439 Frankfurt am Main (DE)
(86) Internationale Anmeldenummer: EP9902096
(87) Internationale Veröffentlichungsnummer: WO9950112

(56) Entgegenhaltungen:
- DE-A- 4 129 919
- US-A- 4 629 043

## Beschreibung

Die vorliegende Erfindung betrifft eine elektrische Feststellbremsanlage für ein Kraftfahrzeug mit einer elektronischen Steuereinrichtung zur Ansteuerung einer Radbremseinrichtung und einem Bedienelement zur Betätigung der elektrischen Feststellbremsanlage.

Eine derartige elektrische Feststellbremsanlage ist aus der DE 41 29 919 A1 bekannt. In dieser Druckschrift ist eine als Fremdkraftbremsanlage ausgebildete Feststellbremse mit elektromotorischer Bremsenbetätigung und einem elektronischen Steuergerät beschrieben, wobei das Steuergerät mit Sensoren, welche Betriebszustände des Kraftfahrzeuges erfassen, elektrisch verbunden ist. Das elektronische Steuergerät steuert das Spannen und Lösen der Radbremsen in Abhängigkeit von Signalen einer Bremsenbetätigungseinrichtung und/oder der Sensoren.

Es sei bemerkt, daß die für Genehmigungen ab dem 22. Februar 1997 gültige gesetzliche Bestimmung ECE R 13.09 5.2.1.26.2 fordert, daß bei Feststellbremsanlagen (EPB) mit elektrischer Übertragungseinrichtung, bei elektrischem Fehler, diese EPB vom Fahrersitz aus betätigbar sein muß. Dabei muß eine vorgeschriebene Feststellwirkung erreicht werden. Die vorgeschriebene Feststellwirkung bezieht sich auf den statischen Test auf einer schiefen Ebene mit achtzehnprozentiger Hangneigung. Bei den, sich aus den gesetzlichen Bestimmungen ergebenden Fahrzeugklassen M1 und N1 darf die Getriebebremswirkung mitbenutzt werden. Weiterhin muß eine den gesetzlichen Bestimmungen genügende EPB mit im Fahrzeug mitgeführten Einrichtungen lösbar sein.

Die Aufgabe der vorliegenden Erfindung besteht daher darin, die Nachteile des Standes der Technik zu vermeiden und eine elektrische Feststellbremsanlage mit erweiterter Funktionalität, erhöhter Sicherheit und verbessertem Komfort zu schaffen. Insbesondere soll durch die Erfindung eine Feststellbremsanlage vorgesehen werden, durch die Fremdbremsungen, insbesondere auch während der Fahrt, mit hoher Dynamik, feiner Dosierbarkeit und unter Einbeziehung von Schlupfregelvorgängen möglich sind.

Die erfindungsgemäße Aufgabe wird bei einer elektrischen Feststellbremsanlage der eingangs genannten Art dadurch gelöst, dass bei Betätigung des Bedienelements (1) im ruhenden Zustand des Kraftfahrzeugs je nach Fahrerwunsch eine zeitlich und in der Maximalkraft vordefiniertes Zuspannen bzw. Lösen der Feststellbremsanlage erfolgt, während bei Betätigung des Bedienelements (1) im fahrenden Zustand des Kraftfahrzeugs ein über die Dauer der Betätigung dosierbares Zuspannen der elektrischen Feststellbremsanlage und ein Lösen der Feststellbremsanlage über eine vorgegebene Funktion der Zeit veranlasst wird. Dadurch kann eine dosierte Bremsung unter Berücksichtigung der aktuellen Fahrsituation vorgenommen werden. Aus Sicherheitsgründen ist es vorteilhaft, wenn die erfindungsgemäße elektrische Feststellbremse wenigstens einen Sensor aufweist, der ein Blockieren eines Rades detektiert und darauf ansprechend ein Signal an die elektrische Steuereinrichtung liefert. Zur Vermeidung einer unkontrollierten Fahrsituation löst die elektrische Steuereinrichtung ansprechend auf das Signal des wenigstens einen Sensors einen Bremseingriff des Rads.

Gemäß einer vorteilhaften Ausführung der elektrischen Feststellbremsanlage wird im ruhenden Zustand des Kraftfahrzeugs durch eine Betätigung des Bedienelements die elektrische Feststellbremsanlage je nach Fahrerwunsch alternierend gespannt und gelöst.

Aus Gründen des Komforts ist zur Weiterbildung der vorliegenden Erfindung eine Park-Betriebsart der erfindungsgemäßen Feststellbremsanlage vorgesehen, bei der die Steuereinrichtung die elektrische Feststellbremsanlage beim Parken automatisch feststellt.
Eine komfortable und sichere weitere Weiterbildung der vorliegenden Erfindung sieht eine erste Anfahr-Betriebsart der erfindungsgemäßen Feststellbremsanlage vor, bei der die elektrische Steuereinrichtung die Feststellbremsanlage automatisch beim Anfahren nach dem Parken löst.

Gemäß einer weiteren Weiterbildung der vorliegenden Erfindung ist eine zweite Anfahr-Betriebsart der erfindungsgemäßen Feststellbremsanlage vorgesehen, bei der die elektrische Steuereinrichtung auf eine Betätigung des Bedienelements hin die Feststellbremsanlage vor dem Anfahren spannt und während des Anfahrvorganges mit einer geeigneten Dynamik wieder löst.

Vorteilhafterweise ist eine dritte Anfahr-Betriebsart vorgesehen, bei der die elektrische Steuereinrichtung die elektrische Feststellbremsanlage selbsttätig vor dem Anfahren spannt und während des Anfahrvorganges wieder löst. Dabei wird ein Wegrollen des Fahrzeuges entgegen der Anfahrrichtung vermieden wobei die gewünschte Anfahrrichtung z. B. aus der Gangwahl ermittelt werden kann (Hillholder).

Vorzugsweise weist die elektrische Feststellbremsanlage wenigstens einen Neigungswinkelsensor auf, der die Neigung des Fahrzeugs detektiert und darauf ansprechend ein Signal an die elektronische Steuereinrichtung liefert. Auf diese Weise kann die Feststellbremsanlage aufgrund einer Hangneigung einen Bremsvorgang einleiten bzw. unterstützen, ohne daß der Fahrer einen gesonderten Bremsvorgang initiieren muß.

Gerade beim Einparken muß der Fahrer eine Vielzahl von Tätigkeiten durchführen, weshalb sich ein besonders sicherer und komfortabler Betrieb der erfindungsgemäßen Feststellbremsanlage und eine Entlastung des Fahrers durch eine Einpark-Betriebsart, bei der die elektronische Steuereinrichtung die elektrische Feststellbremsanlage automatisch beim Einparken betätigt, ergibt.
Vorteilhafterweise weist die erfindungsgemäße Feststellbremsanlage wenigstens einen Abstandssensor auf, der den Abstand des Kraftfahrzeugs zu einem Hindernis, insbesondere zu einem anderen Kraftfahrzeug, bestimmt, und darauf ansprechend ein Signal an die elektrische Steuereinrichtung liefert. Auf diese Weise kann die erfindungsgemäße Feststellbremsanlage eine Kollision mit dem Hindernis, insbesondere beim Einparken, verhindern.

Die Erfindung sowie weitere Vorteile und Ausgestaltungen derselben wird bzw. werden nachfolgend anhand der Zeichnungen näher erläutert. In den Zeichnungen zeigen:
Fig. 1 ein schematisches Diagramm, das den Aufbau der erfindungsgemäßen elektrischen Feststellbremsanlage zeigt;
Fig. 2 eine schematische Übersicht, welche die Funktionsmerkmale der erfindungsgemäßen elektrischen Feststellbremsanlage im Hinblick auf die Mensch-Maschine-Interaktion darstellt; und
Fig. 3 eine schematische Übersicht zur Veranschaulichung der funktionalen Merkmale einer erfindungsgemäßen elektrischen Feststellbremsanlage.

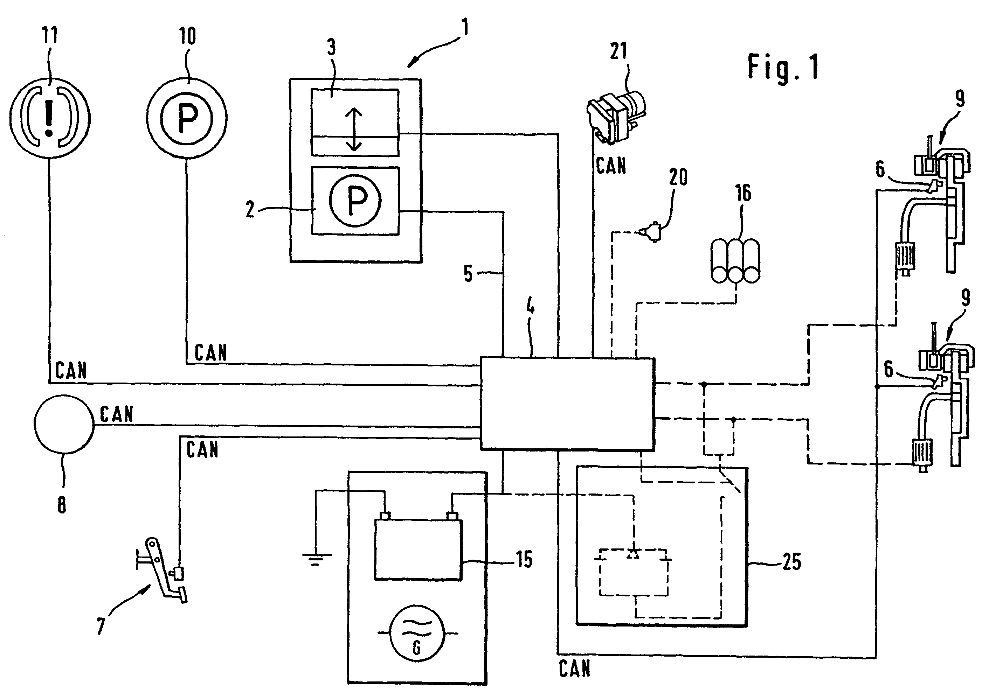

In Fig. 1 ist das Systemkonzept einer erfindungsgemäßen elektrischen Feststellbremsanlage (EPB) schematisch dargestellt. Ein Tastschalter 1 ist als Bedienelement für die elektrische Feststellbremsanlage vorgesehen. Der Tastschalter 1 weist einen vom Fahrer betätigbaren Einfachtaster 2 auf, der lediglich die Zustände "betätigt" und "nicht betätigt" unterscheidet. Analog dazu kann der Tastschalter 1 auch als Zweifach- oder Wipptaster 2 ausgeführt sein, der die Zustände "Nullstellung" (Ruheposition), "Betätigen" und "Lösen" unterscheidet und entsprechend dem Fahrerwunsch eine Ansteuerung der Radbremseinrichtung ermöglicht. Ergänzend dazu besitzt das Bedienelement vorzugsweise eine permanente Statusanzeige 3, die insbesondere als eine rote Fahne ausgebildet ist. Der Tastschalter 1 dient zur Fahrerwunscherfassung und zur Zustandsrückmeldung. Die Grundfunktion der erfindungsgemäßen Feststellbremsanlage ist das Betätigen bzw. Lösen der Feststellbremse im Stillstand des Fahrzeugs durch Bedienung des Tastschalters 1. Dies bedeutet ein zeitlich und in der Maximalkraft vordefiniertes Zuspannen und Lösen (An/Aus-Funktion) der Feststellbremsanlage. Zu dieser Grundfunktion kommt die Bedienung des Tastschalters 1 während der Fahrt hinzu. über die Dauer der Betätigung des Tastschalters 1 wird die Zuspannkraft entlang einer vorgegebenen Rampe hochgefahren und über eine vorgegebene Funktion der Zeit gelöst. Aus Sicherheitsgründen (Redundanzprinzip) kann die erfindungsgemäße elektrische Feststellbremsanlage einen weiteren, nicht dargestellten Tastschalter aufweisen. Der Tastschalter 1 ist mit einer Steuereinrichtung 4, die auch als EPB-ECU (ECU = "electronic control unit" = elektronische Steuer- oder Regeleinheit) bezeichnet werden kann, über eine Leitung 5 verbunden. Die Information über den Betriebszustand des Tastschalters 1 und über die Leitung 5 an die Steuereinrichtung 4 übertragen. Die wesentliche Aufgabe der Steuereinrichtung 4 besteht darin, neben der Realisierung einer Steuer- bzw. Regelungsstrategie zur Ansteuerung der elektrischen Feststellbremsanlage, den mittels des Tastschalters 1 signalisierten Fahrerwunsch in entsprechende Steuersignale, die Sollwerte für die Steuerung/Regelung der elektrischen Feststellbremsanlage sind, umzusetzen. Die Steuereinrichtung 4 weist eine elektronische Regeleinheit mit Weckfunktion, insbesondere zur Regelung der Zuspannkraft, und der Belagverschleißerkennung, sowie Diagnosemittel und eine Sicherheitslogik auf. Raddrehzahlsensoren 6 sind über einen CAN-Bus mit der Steuereinrichtung 4 verbunden. Durch die von den Raddrehzahlensoren 6 erfaßte Raddrehzahl erkennt die Steuereinrichtung 4 die Fahrzeuggeschwindigkeit. über den CAN-Bus wird der aktuelle Betätigungszustand der Betriebsbremse 7 (Bremslichtschalter) an die Steuereinrichtung 4 übertragen. Durch die Information über die Fahrzeuggeschwindigkeit und den Betätigungszustand der Betriebsbremsanlage wird die elektrische Feststellbremsanlage fahrsituationsabhängig betrieben, was aus Gründen des Fahrkomforts einer EPB-Bremsung und der Fahrstabilität während eines EPB-Bremsvorgangs vorteilhaft ist. Damit bei ausgeschalteter Zündungsvorrichtung 8 kein unbeabsichtigtes Lösen der Radbremsen 9, die vorzugsweise als Duo-Servo-Topfbremse oder Kombisattelbremse ausgebildet sind, stattfinden kann, was beispielsweise als Kindersicherung dient, ist der Betriebszustand der Zündungsvorrichtung 8 über den CAN-Bus ebenfalls ein Eingangssignal für die Steuereinrichtung 4. Wenn von der Zundungsvorrichtung 8 ein Signal an die Steuereinrichtung 4 geliefert wird, das anzeigt, daß die Zündungsvorrichtung 8 ausgeschaltet ist, wird nur ein Spannen der Radbremsen 9 zugelassen. Es sei bemerkt, daß die Radbremsen 9 durch zwei selbsthemmend ausgelegte Elektromotor-/Getriebe-Einheiten zur Erreichung der Feststellbremswirkung angesteuert werden. Die erfindungsgemäße Feststellbremsanlage erreicht daher die bekannte Funktionalität einer konventionellen mechanischen Feststellbremse durch elektromechanische Mittel, wobei die bremsenden Teile der elektrischen Feststellbremsanlage alleine durch mechanische Selbsthemmung in der Bremsstellung festgehalten werden. Die Steuereinrichtung 4 steuert über den CAN-Bus eine Kontrollampe 10 an, die anzeigt, ob sich die elektrische Feststellbremsanlage in einem gespannten Zustand befindet. Ferner steuert die Steuereinrichtung 4 über den CAN-Bus eine Warnlampe 11 an, die einen Fehler oder einen Betriebsausfall der elektrischen Feststellbremsanlage anzeigt. Zur Energieversorgung der Steuereinrichtung 4 ist eine Fahrzeugbatterie 15 vorgesehen. Darüber hinaus enthält die elektrische Feststellbremsanlage vorzugsweise eine Notbatterie 16, die insbesondere als Batteriepack ausgebildet ist. Die Notbatterie 16 stellt eine Überbrückung der Fahrzeugbatterie 15 für mindestens einen Zuspannvorgang über den Tastschalter 1 sicher. Falls ein Ausfall der Fahrzeugbatterie 15 zur Folge hat, daß die Zündungsvorrichtung 8 nicht als eingeschaltet erkannt werden kann, z. B. bei einem Ausfall des CAN-Busses oder falls kein Zündungssignal vorliegt, führt dies im Sinne einer "Kindersicherung" zu einem einmaligen Zuspannvorgang über die Notbatterie 16. Alternativ dazu kann die Notbatterie 16 bevorzugt derart ausgelegt sein, daß im Falle des Bordnetzausfalles auch ein Lösen der Feststellbremse mittels der Notbatterie 16 ermöglicht wird. Hierbei ist es allerdings erforderlich, daß die Notbatterie stark genug dimensioniert ist, um nach dem Lösen der Feststellbremse ein erneutes Zuspannen zu ermöglichen, damit ein zuverlässiges Abstellen des Fahrzeuges im geparkten Zustand sichergestellt wird. Insbesondere ist gleich einer mechanischen Feststellbremse die erfindungsgemäße Feststellbremsanlage derart ausgelegt, daß ein Zuspannen der Feststellbremsanlage auch bei ausgeschalteter Zündungsvorrichtung 8 erfolgen kann. Hierzu ist es nötig, daß die Steuereinrichtung 4 bzw. die elektrische Regeleinheit geweckt wird, und der Status des Zuspannvorgangs dem Fahrer mittels einer (nicht dargestellten) permanenten Statusanzeige mitgeteilt wird, da die Kontrollampe 10 und die Warnlampe 11 und gegebenenfalls zusätzliche Cockpitanzeigen nicht permanent sichtbar sind. Somit ist bei der erfindungsgemäßen Feststellbremsanlage gewährleistet, daß der Fahrer auch bei deaktivierter Zündungsvorrichtung 8, und bei leerer oder auch ausgebauter Fahrzeugbatterie 15 Informationen dahingehend erhält, daß eine Betätigung oder ein Lösen der Bremsanlage erfolgt ist, oder daß eine Betätigung oder ein Lösen der Bremsanlage nicht erfolgt ist, und was der aktuelle Betätigungsstatus (unbetätigt, teilbetätigt oder vollbetätigt) der Bremsanlage ist. Ein Neigungswinkelsensor 20 ist in der Elektronik der Steuereinrichtung 4 integriert und liefert der Steuereinrichtung 4 ein auf den Neigungswinkel des Fahrzeugs ansprechendes Signal. Der Neigungswinkelsensor 20 ist insbesondere zur Erzielung der Funktionalität einer aktiven Anfahrhilfe bevorzugt. über den CAN-Bus ist eine Schnittstelle zur externen Ansteuerung und zur Kommunikation, beispielsweise durch bzw. mit einer hydraulischen, schlupfgeregelten Bremsanlage 21 oder einer fremdansteuerbaren, aktiven Betriebsbremse vorgesehen. Für Kraftfahrzeuge mit Schaltgetriebe ist vorzugsweise eine Notbetätigungseinrichtung 25 vorgesehen, durch die sichergestellt wird, daß das Kraftfahrzeug bei einer, z. B. achtzehnprozentigen, Hangneigung auch bei einem Fehler der elektrischen Feststellbremsanlage zum Stillstand gebracht werden kann. Dazu weist die Notbetätigungseinrichtung 25 ein separates Bedienelement auf, das in dem Tastschalter 1 integriert oder an einem geeigneten Platz im Innenraum (vom Fahrersitz aus bedienbar) versteckt angeordnet sein kann. Tritt ein Fehler in der Steuereinrichtung 4 oder im Tastschalter 1 auf, wird die Notbetätigungseinrichtung 25 freigeschaltet und kann zum Zuspannen der Aktuatoren der elektrischen Feststellbremse verwendet werden.

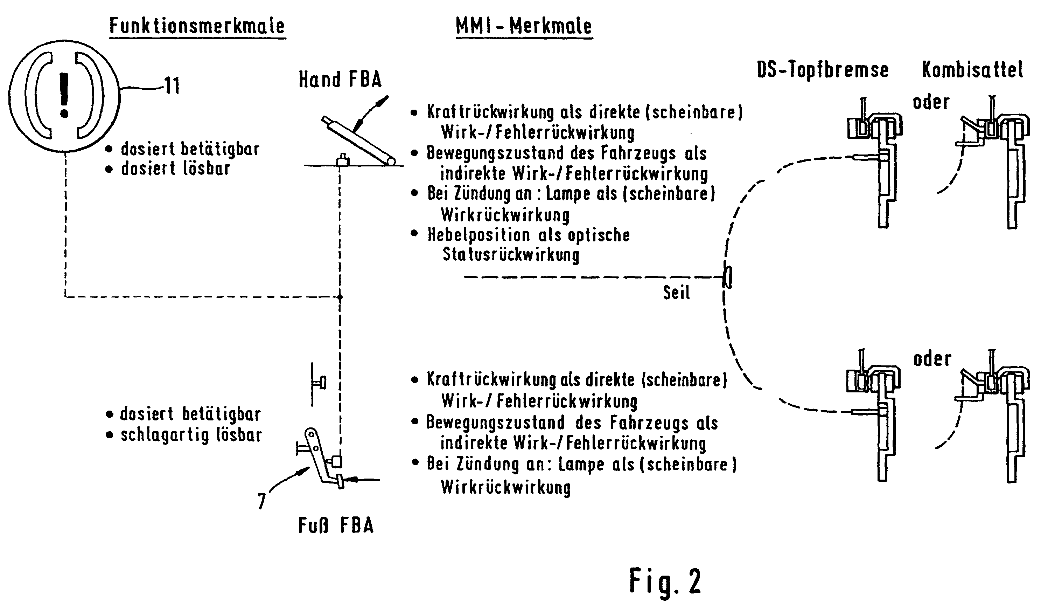

Fig. 2 zeigt eine schematische Übersicht, welche die Mensch-Maschine-Interaktion (MMI) einer, von Hand, sowie einer, mit dem Fuß betätigten Feststellbremsanlage im Hinblick auf die Status-, Wirk- und Fehlerrückmeldung darstellt. Beiden Typen von Bremsanlagen ist gemeinsam, daß sie dosiert betätigbar sind. Im Gegensatz zu einer von Hand betätigten Feststellbremsanlage, die auch dosiert lösbar ist, ist eine mit dem Fuß betätigbare Feststellbremsanlage nur schlagartig lösbar. Eine mit einem Hebel konventionell von Hand betätigte Feststellbremsanlage besitzt durch die Hebelposition eine optische Statusrückwirkung. Beide Typen von Bremsanlagen besitzen durch die Kraftrückwirkung eine direkte oder scheinbare Wirk- bzw. Fehlerrückwirkung. Ferner stellt der Bewegungszustand des Kraftfahrzeugs eine indirekte Wirk- bzw. Fehlerrückwirkung dar. Schließlich gibt, bei eingeschalteter Zündungsvorrichtung 8, die Kontrollampe 10 eine scheinbare Wirkrückwirkung an.

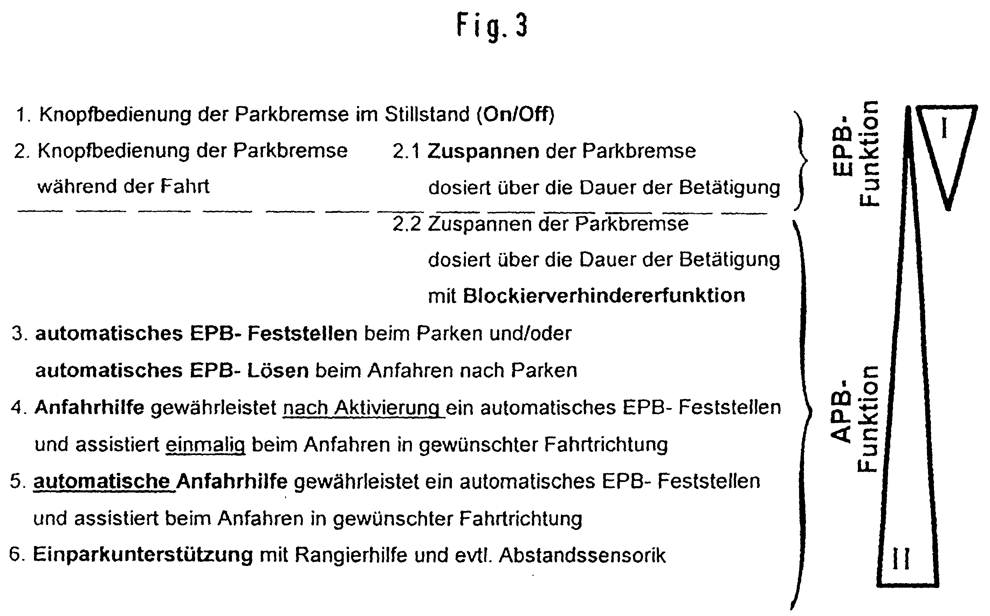

Schließlich ist in Fig. 3 schematisch der Übergang von der Grundfunktion einer elektrischen Feststellbremse zu der erfindungsgemäßen elektrischen Feststellbremsanlage mit erweiterter Funktionalität, die auch als aktive Feststellbremsanlage (APB) bezeichnet werden kann, in einer zusammenfassenden Übersicht dargestellt.

### Bezugszeichenliste:

- 1: Tastschalter
- 2: Einfach-/Zweifachtaster
- 3: Statusanzeige
- 4: Steuereinrichtung
- 5: Leitung
- 6: Raddrehzahlsensoren
- 7: Betriebsbremse
- 8: Zündungsvorrichtung
- 9: Bremseinrichtung oder Radbremsen
- 10: Kontrollampe
- 11: Warnlampe
- 15: Fahrzeugbatterie
- 16: Notbatterie
- 20: Neigungswinkelsensor
- 21: hydraulische, schlupfgeregelte Bremsanlage
- 25: Notbetätigungseinrichtung

## Patentansprüche

1. Elektrische Feststellbremsanlage für ein Kraftfahrzeug mit einer elektrischen Steuereinrichtung (4) zur Ansteuerung wenigstens einer Radbremse (9) über eine selbsthemmend ausgelegte Elektromotor-/Getriebe-Einheit, um eine Feststellbremswirkung zu erreichen, mit einem Bedienelement (1) zur Betätigung der elektrischen Feststellbremsanlage und mit wenigstens einem mit der Steuereinrichtung (4) verbundenen Sensor (6), wobei bei Betätigung des Bedienelements (1) ein Zuspannen bzw. Lösen der Feststellbremsanlage mit Maximalkraft bzw. völliger Entspannung oder dosierter Spannkraft erfolgt, **gekennzeichnet durch**:
• ein bei Betätigung des Bedienelements (1) im ruhenden Zustand des Kraftfahrzeugs je nach Fahrerwunsch zeitlich und in der Maximalkraft vordefiniertes Zuspannen bzw. Lösen der Feststellbremsanlage,
• ein bei Betätigung des Bedienelements (1) im fahrenden Zustand des Kraftfahrzeugs über die Dauer der Betätigung dosierbares Zuspannen der elektrischen Feststellbremsanlage bzw. ein Lösen der Feststellbremsanlage über eine vorgegebene Funktion der Zeit,
• wenigstens einen Sensor (6), der ein Blockieren eines Rades detektiert und darauf ansprechend ein Signal an die elektrische Steuereinrichtung (4) liefert, wobei die elektrische Steuereinrichtung (4) ansprechend auf das Signal des wenigstens einen Sensors (6) einen Bremseingriff des Rads löst.

2. Elektrische Feststellbremsanlage nach Anspruch 1, **dadurch gekennzeichnet, daß** die elektrische Feststellbremsanlage im ruhenden Zustand des Kraftfahrzeuges und bei Betätigung des Bedienelementes (1) je nach Fahrerwunsch für aufeinanderfolgende Betätigungen alternierend entweder spannt oder löst.

3. Elektrische Feststellbremsanlage nach einem der vorhergehenden Ansprüche, **gekennzeichnet durch** eine Park-Betriebsart, bei der die Steuereinrichtung (4) die elektrische Feststellbremsanlage beim Parken automatisch feststellt.

4. Elektrische Feststellbremsanlage nach einem der vorhergehenden Ansprüche, **gekennzeichnet durch** eine erste Anfahr-Betriebsart, bei der die elektrische Steuereinrichtung (4) die Feststellbremsanlage automatisch beim Anfahren nach dem Parken löst.

5. Elektrische Feststellbremsanlage nach einem der vorhergehenden Ansprüche, **gekennzeichnet durch** eine zweite Anfahr-Betriebsart, bei der die elektrische Steuereinrichtung (4) auf eine Betätigung des Bedienelements (1) hin die Feststellbremsanlage vor dem Anfahren spannt und während des Anfahrvorganges löst.

6. Elektrische Feststellbremsanlage nach einem der vorhergehenden Ansprüche, **gekennzeichnet durch** eine dritte Anfahr-Betriebsart, bei der die elektrische Steuereinrichtung (4) selbsttätig die elektrische Feststellbremsanlage vor dem Anfahren spannt und während des Anfahrvorganges löst.

7. Elektrische Feststellbremsanlage nach einem der vorhergehenden Ansprüche, **gekennzeichnet durch** wenigstens einen Neigungswinkelsensor (20), der die Neigung des Fahrzeugs detektiert und darauf ansprechend ein Signal an die elektrische Steuereinrichtung (4) liefert.

8. Elektrische Feststellbremsanlage nach einem der vorhergehenden Ansprüche, **gekennzeichnet durch** eine Einpark-Betriebsart, bei der die elektronische Steuereinrichtung (4) die elektrische Feststellbremsanlage automatisch beim Einparken betätigt.

9. Elektrische Feststellbremsanlage nach einem der vorhergehenden Ansprüche, **gekennzeichnet durch** wenigstens einen Abstandsensor, der den Abstand des Kraftfahrzeugs zu einem Hindernis, insbesondere einem anderen Kraftfahrzeug, bestimmt, und darauf ansprechend ein Signal an die elektrische Steuereinrichtung (4) liefert.

## Claims

1. Electric parking brake system for a motor vehicle with an electric control unit (4) for controlling at least one wheel brake (9) by means of a self-locking electric motor/transmission unit in order to achieve a parking brake effect, with an operating element (1) for actuating the electric parking brake system, and with at least one sensor (6) connected to the control unit (4), wherein upon actuation of the operating element (1) the parking brake system is applied or released with maximum force or, respectively, with complete release or controlled application force,
**characterized by**:
• the application or release of the parking brake system, according to the driver's request, predetermined with regard to time or to the maximum force, by actuating the operating element (1) in the resting position of the motor vehicle,
• a controllable application of the electric parking brake system on actuating the operating element (1) when the motor vehicle is moving, as long as the operating element is actuated or, respectively, a release of the parking brake system by means of a predetermined function of time,
• at least one sensor (6) detecting the locking of a wheel and consequently delivering a signal to the electric control unit (4), the electric control unit (4) releasing the brake application on the wheel as a reaction to the signal of the at least one sensor (6).

2. Electric parking brake system according to claim 1, **characterized in that** the electric parking brake system is alternatingly applied or released in the resting position of the motor vehicle and on consecutive actuations of the operating element (1) according to the driver's request.

3. Electric parking brake system according to any one of the preceding claims, **characterized by** a parking operating mode in which the control unit (4) automatically blocks the electric parking brake during parking.

4. Electric parking brake system according to any one of the preceding claims, **characterized by** a first starting operating mode, in which the electric control unit (4) automatically releases the electric parking brake system when starting the parked vehicle.

5. Electric parking brake system according to any one of the preceding claims, **characterized by** a second starting operating mode in which the electric control unit (4) applies the parking brake system before starting and releases it during the starting operation, when the operating element (1) is actuated.

6. Electric parking brake system according to any one of the preceding claims, **characterized by** a third starting operating mode, in which the electric control unit (4) automatically applies the electric parking brake system before starting the vehicle, releasing the brake during the start.

7. Electric parking brake system according to any one of the preceding claims, **characterized by** at least one gradient sensor (20), detecting the inclination of the vehicle and consequently delivering a signal to the electric control unit (4).

8. Electric parking brake system according to any one of the preceding claims, **characterized by** a parking-in operating mode in which the electronic control unit (4) automatically applies the electric parking brake when parking in the vehicle.

9. Electric parking brake system according to any one of the preceding claims, **characterized by** at least one distance sensor determining the distance between the motor vehicle and an obstacle, in particular another motor vehicle, and consequently delivering a signal to the electric control unit (4).

## Revendications

1. Dispositif électrique de frein de stationnement pour un véhicule automobile avec un dispositif de commande électrique (4) pour l'amorçage d'au moins un frein de roue (9) au moyen d'une unité moteur électrique / boîte de vitesse conçue de conception autobloquante, afin d'obtenir un effet de freinage de stationnement, avec un élément de commande (1) pour l'actionnement du dispositif électrique de frein de stationnement et avec au moins un capteur (6) relié au dispositif de commande (4), un serrage ou un desserrage du dispositif de frein de stationnement s'effectuant avec une force maximale ou une décharge complète ou une force de serrage dosée lors de l'actionnement de l'élément de commande (1), **caractérisé par**
• un serrage et un desserrage du dispositif de frein de stationnement qui est prédéfini dans le temps et la force maximale en fonction du souhait du conducteur en cas d'actionnement de l'élément de commande (1) lorsque le véhicule est au repos,
• un serrage du dispositif électrique de frein de stationnement qui peut être dosé en cas d'actionnement de l'élément de commande (1) lorsque le véhicule roule en fonction de la durée de l'actionnement ou un desserrage du dispositif de frein de stationnement par une fonction prédéfinie du temps,
• au moins un capteur (6), qui détecte un blocage d'une roue et envoie ensuite en réaction un signal au dispositif de commande électrique (4), le dispositif de commande électrique (4) déclenchant un desserrage du frein de roue en réaction au signal d'au moins un capteur (6).

2. Dispositif électrique de frein de stationnement selon la revendication 1, **caractérisé en ce que** le dispositif électrique de frein de stationnement serre ou desserre en alternance selon le souhait du conducteur pour des manoeuvres successives lorsque le véhicule est à l'arrêt et en cas d'actionnement de l'élément de commande (1).

3. Dispositif électrique de frein de stationnement selon l'une quelconque des revendications précédentes, **caractérisé par** un mode de parking, avec lequel le dispositif de commande (4) bloque automatiquement le dispositif électrique de frein de stationnement lorsqu'on se gare.

4. Dispositif électrique de frein de stationnement selon l'une quelconque des revendications précédentes, **caractérisé par** un premier mode de démarrage, avec lequel le dispositif de commande électrique (4) desserre automatiquement le dispositif frein de stationnement lors du démarrage après le parking.

5. Dispositif électrique de frein de stationnement selon l'une quelconque des revendications précédentes, **caractérisé par** un deuxième mode de démarrage, avec lequel le dispositif de commande électrique (4) serre le dispositif de frein stationnement avant le démarrage à la suite de l'actionnement de l'élément de commande (1) et le desserre pendant l'opération de démarrage.

6. Dispositif électrique de frein de stationnement selon l'une quelconque des revendications précédentes, **caractérisé par** un troisième mode de démarrage, avec lequel le dispositif de commande électrique (4) serre automatiquement le dispositif électrique de frein de stationnement avant le démarrage et le desserre pendant l'opération de démarrage.

7. Dispositif électrique de frein de stationnement selon l'une quelconque des revendications précédentes, **caractérisé par** au moins un capteur d'angle d'inclinaison (20), qui détecte l'inclinaison du véhicule et envoie ensuite en réaction un signal au dispositif de commande électrique (4).

8. Dispositif électrique de frein de stationnement selon l'une quelconque des revendications précédentes, **caractérisé par** un mode de service de parking, avec lequel le dispositif de commande électrique (4) actionne automatiquement le dispositif électrique de frein de stationnement lorsqu'on se gare.

9. Dispositif électrique de frein de stationnement selon l'une quelconque des revendications précédentes, **caractérisé par** au moins un capteur de distance, qui détermine la distance entre le véhicule et un obstacle, en particulier un autre véhicule, et envoie ensuite en réaction un signal au dispositif de commande électrique (4).
